# EUROPEAN PATENT APPLICATION

(11) **EP 2 908 543 A1**
(43) Date of publication of application: **19.08.2015**
(21) Application number: 13845849.2
(22) Date of filing: 22.08.2013
(51) Int. Cl.: H04N 21/45

(54) **METHOD AND DEVICE FOR PROCESSING BREAKPOINT PLAYING**

(30) Priority: 11.10.2012 CN 201210384348
(71) Applicant: ZTE Corporation, Shenzhen, Guangdong 518057 (CN)
(72) Inventor: LIANG, Guozhu, Shenzhen Guangdong 518057 (CN); KONG, Jianhua, Shenzhen Guangdong 518057 (CN)
(74) Representative: Bongiovanni, Simone
(86) International application number: PCT/CN2013/082112
(87) International publication number: WO 2014/056357

(57) **Abstract**

Disclosed are a method and device for processing breakpoint play. The method comprises: a type of identification information to be stored is determined, wherein the identification information is used for indicating pause playing or exit playing when a first set top box plays a file, and the type includes at least one of the followings: a sharing type and a private type, wherein the sharing type is an identification type which is stored by the first set top box triggered by an EPG server when the first set top box last exits from playing, is shared by a plurality of set top boxes and is used for indicating to continue playing from a current breakpoint; and the private type is an identification type which is stored by the first set top box triggered by the EPG server when the first set top box last exits from playing, is only used for the first set top box to continually play from the current breakpoint; and triggering a second set top box to perform a playing operation corresponding to the identification information, so that the flexible and various storing modes of identification information about breakpoint play are realized, and the requirements for multi-scenario breakpoint play in a Whole Home DVR are met.

## Description

### Technical Field

The present invention relates to communications field, and in particular to a method and device for processing breakpoint play.

### Background

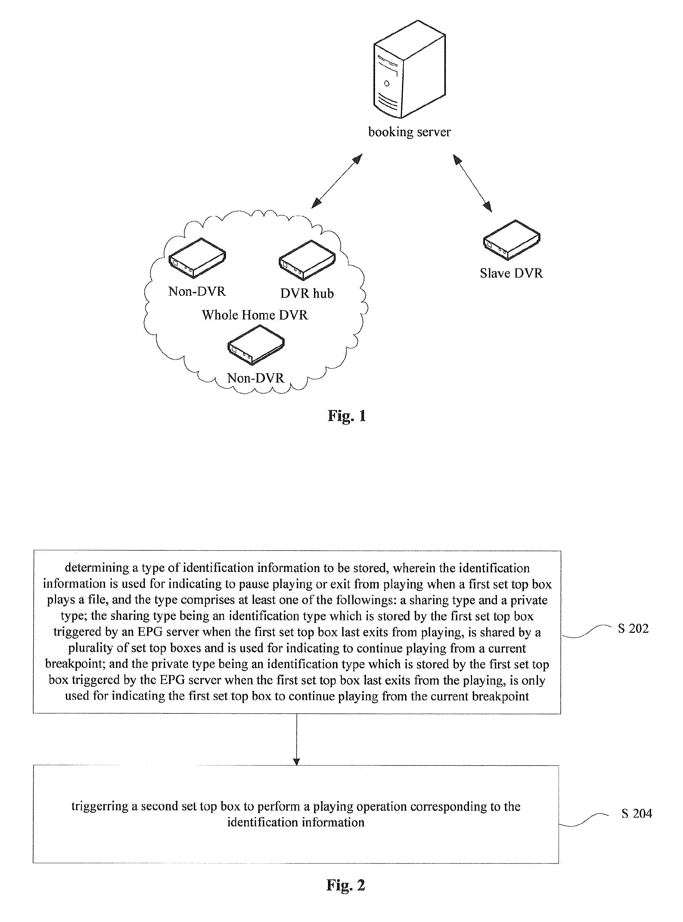

At present, there are usually multiple set top boxes in most users' families of Internet Protocol Television (IPTV) high-end operators, wherein the set top boxes comprises: multiple Digital Video Recorder (DVR) set top boxes (with hard disk) and multiple Non-DVR set top boxes (without hard disk). Because only the DVR set top box can record a multimedia file, for achieving the aim that the Non-DVR set top box can share files recorded on the DVR set top box, a solution of Whole Home DVR is provided. Fig. 1 is a schematic diagram of Whole Home DVR system composition according to the relevant art. As shown in Fig. 1, the solution comprises the following content: a user can set one of the multiple DVR set top boxes as a DVR hub, and then the DVR hub automatically combines with other common Non-DVR Set Top Boxes (STB) to compose a Whole Home DVR. All the set top boxes in the Whole Home DVR can initiate booking, and the DVR hub takes charge of recording and storing the record file; all the set top boxes can browse a booking plan and a recording record without distinction, and there is only one DVR set top box in the Whole Home DVR; the other DVR set top boxes in the family can serve as slave DVRs which are independent of the Whole Home DVR; the booking plan and the record file of the slave DVR set top box cannot be shared.

The above solution of Whole Home DVR supports shared playing of the DVR record file, in other word, all the set top boxes in the Whole Home DVR can watch a DVR file recorded on the hub. Playing of the DVR file needs a function of breakpoint play; in related art, the usual way of breakpoint play is that a file corresponds to a bookmark (namely a breakpoint position identification); this way is disadvantaged in that all the set top boxes can only start to play from this bookmark when performing breakpoint play; when a plurality of users view the multimedia file, the time that each user pauses or exits playing is different, so the position of respective breakpoint is different too; using only one bookmark will heavily reduce the flexibility of breakpoint play; the user has to start to look up (or move forward or move backward) from the breakpoint position, and can find the breakpoint position of last view only after a period of time. Moreover, there are multiple scenarios of breakpoint play in the Whole Home DVR, but all breakpoint play ways adopted in related art cannot meet the multiple scenarios, for example, there are 3 set top boxes in the current Whole Home DVR, which are respectively one DVR Hub set top box A and two Non-DVR set top boxes B and C; the following scenarios cannot be met in related art:
Scenario 1: A, B and C respectively continue to watch playing content at last breakpoint on their own set top boxes;
Scenario 2: A exits after watching half of the playing content on its own set top box, and can also continue to watch the breakpoint play content on B or C; and
Scenario 3: A exits after watching half of the playing content on its own set top box, and continues to watch the breakpoint play content on B; A exits again after watching for a period of time on the set top box where B is and continues to watch the breakpoint play content on C.

### Summary

The embodiment of the present invention provides a method and device for processing breakpoint play, so as to at least solve the problem of setting of a breakpoint play identification is simplex in form and lack of flexibility in related art.

According to one embodiment of the present invention, a method for processing breakpoint play is provided.

The method for processing breakpoint play according to the present invention comprising: determining a type of identification information to be stored, wherein the identification information is used for indicating to pause playing or exiting from playing when a first set top box plays a file, and the type includes at least one of the followings: a sharing type and a private type; the sharing type being an identification type which is stored by the first set top box triggered by an Electronic Program Guide (EPG) server when the first set top box last exits from playing, is shared by a plurality of set top boxes and is used for indicating to continue playing from a current breakpoint; and the private type being an identification type which is stored by the first set top box triggered by the EPG server when the first set top box last exits from the playing, is only used for indicating the first set top box to continue playing from the current breakpoint; and triggering a second set top box to perform a playing operation corresponding to the identification information.

Preferably, the sharing type is a global type; the global type being an identification type which is stored by the first set top box triggered by the EPG server when the first set top box last exits from the playing, is shared by all the set top boxes and is used for indicating to continue playing from the current breakpoint.

Preferably, the sharing type is a global type; the global type being an identification type which is stored by the first set top box triggered by the EPG server when the first set top box last exits from the playing, is shared by the one or more set top boxes with the same type as a type of the first set top box and is used for indicating to continue playing from the current breakpoint.

Preferably, determining the type of identification information to be stored includes: displaying the type of identification information to be stored; and obtaining the type of identification information selected by a user.

Preferably, displaying the type of identification information to be stored includes: determining whether to display the type of the identification information to be stored according to the type of the first set top box, wherein the type of the first set top box includes one of the followings: a DVR set top box and a Non-DVR set top box; obtaining the type of identification information selected by the user includes: obtaining the identification information selected by the user when the type of the first set top box is the Non-DVR set top box.

Preferably, triggering the second set top box to perform the playing operation corresponding to the identification information when the type of the first set top box is the DVR set top box includes: determining that there is identification information with the sharing type on the DVR set top box; and triggering the DVR set top box to continue playing a multimedia file from a position indicated by the identification information with the sharing type.

Preferably, determining the type of the identification information to be stored when the type of the first set top box is the Non-DVR set top box includes: displaying the identification information with the sharing type and the identification information with the private type stored by the Non-DVR set top box simultaneously; and obtaining the type of the identification information selected by the user, and triggering the Non-DVR set top box to store the type of the identification information selected by the user.

Preferably, triggering the second set top box to perform a playing operation corresponding to the identification information when the type of the first set top box is the Non-DVR set top box includes: displaying the identification information with the sharing type stored by the DVR set top box, the identification information with the sharing type and the identification information with the private type stored by the Non-DVR set top box simultaneously; and obtaining the type of the identification information selected by the user, and triggering the Non-DVR set top box to continually play the multimedia file from a position indicated by the identification information corresponding to the type selected by the user after it is determined that there is identification information corresponding to the type selected by the user on the Non-DVR set top box.

According to another embodiment of the present invention, a device for processing breakpoint play is provided.

The device for processing breakpoint play according to the present invention comprising: a determining component is configured to determine a type of identification information to be stored, wherein the identification information is used for indicating to pause playing or exit from playing when a first set top box plays a file, and the type includes at least one of the following types: a sharing type and a private type; the sharing type being an identification type which is stored by the first set top box triggered by an EPG server when the first set top box last exits from playing, is shared by a plurality of set top boxes and is used for indicating to continue playing from a current breakpoint; and the private type being an identification type which is stored by the first set top box triggered by the EPG server when the first set top box last exits from playing, is only used for indicating the first set top box to continue playing from the current breakpoint; and a triggering component is configured to trigger a second set top box to perform a playing operation corresponding to the identification information.

Preferably, the sharing type is a global type; the global type being an identification type which is stored by the first set top box triggered by the EPG server when the first set top box last exits from the playing, is shared by all the set top boxes and is used for indicating to continue playing from the current breakpoint.

Preferably, the sharing type is a global type; the global type being an identification type which is stored by the first set top box triggered by the EPG server when the first set top box last exits from the playing, is shared by one or more the set top boxes with the same type as a type of the first set top box and is used for indicating to continue playing from the current breakpoint.

Preferably, the determining component includes: a first displaying component is configured to display the type of identification information to be stored; and an obtaining component is configured to obtain the type of identification information selected by a user.

Preferably, the first displaying component is configured to determine whether to display the type of the identification information to be stored according to the type of the first set top box, wherein the type of the first set top box includes one of the followings: a DVR set top box and a Non-DVR set top box; and the obtaining component is configured to obtain the identification information selected by the user when the type of the first set top box is the Non-DVR set top box.

Preferably, the triggering component includes: a determining component is configured to determine that there is identification information with the sharing type on the DVR set top box when the type of the first set top box is the DVR set top box; and a first triggering component is configured to trigger the DVR set top box to continue playing a multimedia file from a position indicated by the identification information with the sharing type.

Preferably, the first displaying component is further configured to display the identification information with the sharing type and the identification information with the private type stored by the Non-DVR set top box simultaneously when the type of the first set top box is the Non-DVR set top box; and the obtaining component is further configured to obtain the type of the identification information selected by the user and trigger the Non-DVR set top box to store the type of the identification information selected by the user.

Preferably, the triggering component further includes: a second displaying component is configured to display the identification information with the sharing type stored by the DVR set top box, the identification information with the sharing type and the identification information with the private type stored by the Non-DVR set top box simultaneously when the type of the first set top box is the Non-DVR set top box; and a second triggering component is configured to obtain the type of the identification information selected by the user, and trigger the Non-DVR set top box to continually play the multimedia file from a position indicated by the identification information corresponding to the type selected by the user after it is determined that there is identification information corresponding to the type selected by the user on the Non-DVR set top box.

In the embodiments of the present invention, setting breakpoint identification information of a sharing type and/or a private type on the set top box, wherein the sharing type being an identification type which is stored by the first set top box triggered by an EPG server when the first set top box last exits from playing, is shared by a plurality of set top boxes and is used for indicating to continue playing from a current breakpoint, and the private type being an identification type which is stored by the first set top box triggered by the EPG server when the first set top box last exits from playing, is only used for indicating the first set top box to continue playing from the current breakpoint; and triggering the second set top box to perform the playing operation corresponding to the identification information after determining the type of identification information to be stored, therefore, the problem of setting of a breakpoint play identification is simplex in form and lack of flexibility in related art is solved; and then, the flexible and various storing modes of identification information about breakpoint play are realized, and the requirements for multi-scenario breakpoint play in the Whole Home DVR are met.

### Brief Description of the Drawings

Drawings, provided for further understanding of the present invention and forming a part of the specification, are used to explain the present invention together with embodiments of the present invention rather than to limit the present invention, wherein:
Fig. 1 is a schematic diagram of Whole Home DVR system composition according to the relevant art;
Fig. 2 is a flowchart of a method for processing breakpoint play according to an embodiment of the present invention;
Fig. 3 is a preferred schematic diagram of a principle about multi-scenario breakpoint play in a DVR according to an embodiment of the present invention;
Fig. 4 is a preferred schematic diagram that a Non-DVR set top box sets bookmark according to an embodiment of the present invention;
Fig. 5 is a preferred schematic diagram of selecting bookmark for breakpoint play on a Non-DVR set top box according to an embodiment of the present invention;
Fig. 6 is a preferred flowchart of setting bookmark when exiting from playing according to an embodiment of the present invention;
Fig. 7 is a preferred flowchart of breakpoint play according to an embodiment of the present invention;
Fig. 8 is a structural block diagram of a device for processing breakpoint play according to an embodiment of the present invention; and
Fig. 9 is a preferred structural block diagram of a device for processing breakpoint play according to an embodiment of the present invention.

### Detailed Description of Embodiments

The present invention will be described hereinafter in detail with reference to the drawing and in conjunction with the embodiments. It needs to be noted that the embodiments of the present application and the features in the embodiments can be combined with each other if no conflict exists.

Fig. 2 is a flowchart of a method for processing breakpoint play according to an embodiment of the present invention. As shown in Fig. 2, the method comprises the following steps.

Step 202: it is determined a type of identification information to be stored, wherein the identification information is used for indicating to pause playing or exit from playing when a first set top box plays a file, and the type comprises at least one of the followings: a sharing type and a private type, wherein the sharing type is an identification type which is stored by the first set top box triggered by an EPG server when the first set top box last exits from playing, is shared by a plurality of set top boxes and is used for indicating to continue playing from a current breakpoint; and the private type is an identification type which is stored by the first set top box triggered by the EPG server when the first set top box last exits from playing, is only used for indicating the first set top box to continue playing from the current breakpoint.

Step 204: a second set top box is triggered to perform a playing operation corresponding to the identification information.

In related art, setting the breakpoint play identification is simplex in form and lack of flexibility. In the method shown in Fig. 2, the identification information with a sharing type and/or a private type is set on the set top box for breakpoint play, wherein the sharing type is an identification type which is stored by the first set top box triggered by the EPG server when the first set top box last exits from playing, is shared by the plurality of set top boxes and is used for indicating to continue playing from the current breakpoint, and the private type is an identification type which is stored by the first set top box triggered by the EPG server when the first set top box last exits from playing, is only used for indicating the first set top box to continue playing from the current breakpoint; and the second set top box is triggered to perform the playing operation corresponding to the identification information after the type of identification information to be stored is determined. Through the above solution, the problem that setting identification for breakpoint play is simplex in form and lack of flexibility in the related art is solved; and then, the flexible and various storing modes of identification information about breakpoint play are realized, and the requirements for multi-scenario breakpoint play in the Whole Home DVR are met.

In a preferred embodiment, the first set top box and the second set top box may be either the same set top box or the different set top boxes. For example, a user watches a video on the set top box A currently, and exits half way; if the user wants to continue to watch the video at the breakpoint, then the user may continue to watch on either the set top box A for watching the video originally or the set top box B, which mainly depends on a personal willingness of the user.

In a preferred process of implementation, the sharing type may be a global type, wherein the global type is an identification type which is stored by the first set top box triggered by the EPG server when the first set top box last exits from the playing, is shared by all the set top boxes and is used for indicating to continue playing from the current breakpoint.

In a preferred process of implementation, the sharing type may be a global type, wherein the global type is an identification type which is stored by the first set top box triggered by the EPG server when the first set top box last exits from the playing, is shared by one or more set top boxes with the same type as a type of the first set top box and is used for indicating to continue playing from the current breakpoint.

It needs to be noted that, the identification information with the sharing type mentioned in the present invention may be shared by either all the set top boxes in the Whole Home DVR or some of the set top boxes.

In a preferred embodiment, aiming at multiple scenarios of breakpoint play, a technical solution provided by the present invention defines three bookmarks, which are [This Room latest position], [DVR Hub latest position] and [Follow-me bookmark position] respectively, wherein [This Room latest position] indicates a breakpoint position of last watching on the Non-DVR set top box, [DVR Hub latest position] indicates a breakpoint position of last watching on the DVR hub set top box, and [Follow-me bookmark position] is globally set; if the user has set a Follow-me bookmark on the current Non-DVR set top box, then the Follow-me bookmark may be selected on another Non-DVR set top box to continue playing. When setting bookmarks, because both the bookmarks [DVR Hub latest position] and [Follow-me bookmark position] are globally set, only the recently updated one is reserved, and they are set as a public type. The bookmark [This Room latest position] is the bookmark for a certain user, so it should be set as a private type, and a user identity (ID) corresponding to the bookmark is added, so as to obtain the set bookmark [This Room latest position] according to the user ID.

Preferably, in step 202, determining the type of identification information to be stored comprises the following steps.

Step 1: the type of identification information to be stored is displayed.

Step 2: the type of identification information is selected by the user.

In the preferred embodiment, no matter on the DVR Hub set top box or on the Non-DVR set top box, if the user wants to exit half way, the embodiment of the present invention provides a method to store the identification information about breakpoint, wherein the method comprises that one or more pieces of identification information set currently are simultaneously displayed to the user, and then it is determined by the user to whether a type of the one or pieces of identification information store the identification information of the current breakpoint position as the private type, the partial sharing type or the global type; storing the identification information according to the type selected by the user.

Preferably, in step 1, displaying the type of identification information to be stored comprises the following steps: determining whether to display the type of the identification information to be stored according to the type of the first set top box, wherein the type of the first set top box comprises one of the followings: the DVR set top box and the Non-DVR set top box; in step 2, obtaining the type of identification information selected by the user comprises the following steps: obtaining the identification information selected by the user when the type of the first set top box is the Non-DVR set top box.

In the preferred embodiment, the present invention can also determine if it is needed to display the type of the identification information to be stored by determining the type of the set top box. If it is the DVR set top box, the DVR set top box will automatically store the identification information of the breakpoint position after the user exits half way, and will automatically read the identification information when continuing to watch next time to continually play from the last breakpoint position without needing to display the type of the identification information to the user; if it is the Non-DVR set top box, no matter the user exits half way or continues to watch from the breakpoint position, it is needed to display the type of the identification information to the user, and the user determines the stored type of the identification information.

Preferably, in step 204, triggering the second set top box to perform the playing operation corresponding to the identification information when the type of the first set top box is the DVR set top box comprises:
step 3: determining that there is identification information with the sharing type on the DVR set top box; and
step 4: triggering the DVR set top box to continue playing a multimedia file from a position indicated by the identification information with the sharing type.

In the preferred embodiment, when the multimedia file is played on the DVR Hub, if the user wants to exit half way, the DVR Hub will automatically set the bookmark [DVR Hub latest position]; if the user wants to continually play from the breakpoint position, the DVR Hub also will automatically select the bookmark [DVR Hub latest position] to play without needing the user to select.

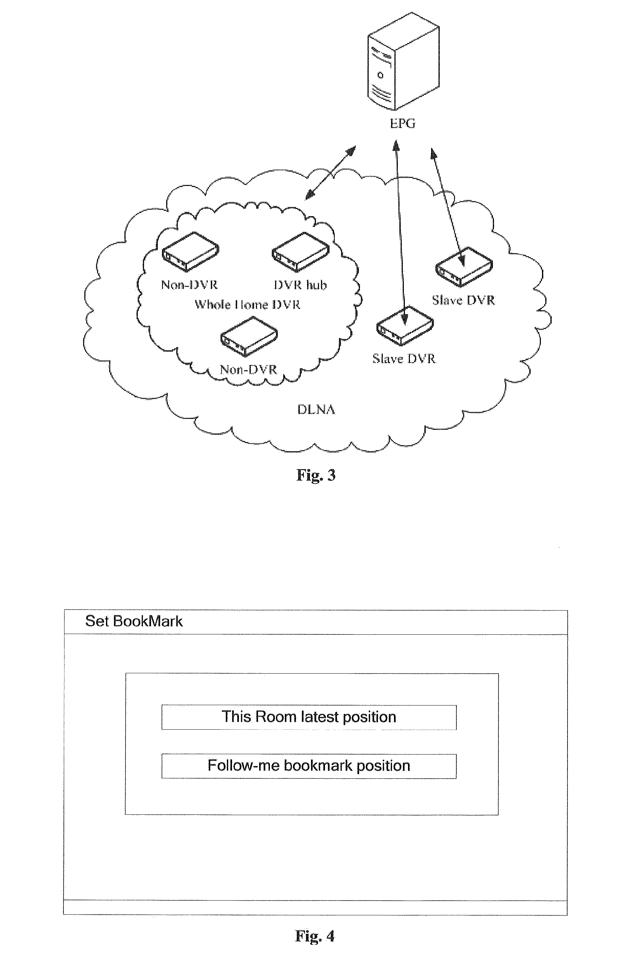

In the preferred embodiment, bookmark information is uniformly stored in the DVR Hub to realize information sharing through a Digital Living Network Alliance (DLNA). A bookmark file bookMark.ini is set under a corresponding record file; on one hand, each record file corresponds to its own bookmark file to be convenient to find the corresponding bookmark information according to the record file, so as to perform adding, modifying or deleting, and other operations; on the other hand, bookmark information files correspond to the record files one to one, so as to synchronously delete the bookmark information corresponding to the record files in the process of deleting or aging the record files. Fig. 3 is a preferred schematic diagram of a principle about multi-scenario breakpoint play in a DVR according to an embodiment of the present invention. As shown in Fig. 3, an EPG component (which is a display layer for displaying an electronic program guide to the user) performs flow control during breakpoint play of the record file or exiting from playing on the EPG; the bookmark is maintained on the DVR hub set top box, and the home STBs share the bookmark information through the DLNA. The STB provides an interface and the EPG component calls, so that inquiring, adding and deleting the bookmark and other functions are implemented. The requirements for multi-scenario breakpoint play in the DVR can be met through the flow control of the EPG, bookmark management of the DVR hub set top box and sharing through the DLNA in the Whole Home DVR.

A method for maintaining the bookmark information on the STB and a definition of interface are elaborated below. The bookmark information of the record file is maintained in the file bookMark.ini corresponding to the record file on the DVR set top box, and the bookmarks of different types are differentiated by adding different identities.

[This Room latest position]: the bookmark of this type can be set only when playing on the Non-DVR set top box; the bookmark of this type is also added to the file bookMark.ini corresponding to the record file on the DVR set top box, and the set top box of the bookmark is assigned by adding a service account. Each record file has only one bookmark [This Room latest position] on the same Non-DVR set top box, and the bookmark is updated when being added again. The specific format in the file bookMark.ini is as follows:
[service account]
RoomLastest= 125
[DVR Hub latest position]: the bookmark of this type can be generated only when playing on the DVR set top box. The specific format in the file bookMark.ini is as follows:
   [public]
   DVRLastest=112
[Follow-me bookmark position]: the bookmark of this type can be set only when playing on the Non-DVR set top box. The specific format in the file bookMark.ini is as follows:
   [public]
   Follow Me=102
[DVR Hub latest position] and [Follow-me bookmark position] can coexist; the specific format in the file bookMark.ini is as follows:
   [public]
   DVRLastest=112
   Follow Me=102

The definition of interface is as follows.

A bookmark adding interface
function: adding a bookmark for the record file
interface: lpvr.set ("dmp_dlnaAddBookMark",
"deviceID#objectID#BookMarkname#time#user#type")
parameter description:
deviceID: corresponding to DMSID; if the type of bookmark is 0, then deviceID is null;
objectID: ItemID corresponding to bookmarked media;
BookMarkname: a bookmark name;
time: a point in time of the bookmark;
user: the user to which the bookmark belongs; if the bookmark belongs to all users, then this field is public;
type: the type of bookmark, 0 denotes [This Room latest position], 1 denotes [DVR Hub latest position], and 2 denotes [Follow-me bookmark position].

A bookmark deleting interface
function: deleting a certain bookmark of the record file;
interface: lpvr.set ("dmp_dlnaDeleteBookMark",
"deviceID#BookMarkname#objectID#time#user#type")
parameter description:
deviceID: corresponding to DMSID; if the type of bookmark is 0, then deviceID is null;
objectID: ItemID corresponding to the bookmarked media;
BookMarkname: a bookmark name;
time: a point in time of the bookmark;
user: the user to which the bookmark belongs; if the bookmark belongs to all users, then this field is public;
type: the type of bookmark, 0 denotes [This Room latest position], 1 denotes [DVR Hub latest position], and 2 denotes [Follow-me bookmark position].

A bookmark information inquiring interface
function: obtaining information of a certain bookmark of the record file;
interface: lpvr.set ("dmp_dlnaGetBookMark", "deviceID#objectID#user#type")
parameter description:
deviceID: corresponding to DMSID; if the type of bookmark is 0, then deviceID is null;
objectID: ItemID corresponding to the bookmarked media;
user: the user to which the bookmark belongs; if the bookmark belongs to all users, then this field is public;
type: the type of bookmark, 0 denotes [This Room latest position], 1 denotes [DVR Hub latest position], and 2 denotes [Follow-me bookmark position].

Report event: GET_BOOKMARK_SUCC (reporting in form of JSON character string)

{"type":"GET_BOOKMARK_SUCC", "result_file_path":"/var/bookmark.xml"}.

Preferably, in step 202, determining the type of identification information to be stored when the type of the first set top box is the Non-DVR set top box may include the following steps:
step 5: displaying the identification information with the sharing type and the identification information with the private type stored by the Non-DVR set top box simultaneously; and
step 6: obtaining the type of the identification information selected by the user, and triggering the Non-DVR set top box to store the type of the identification information selected by the user.

In the preferred embodiment, Fig. 4 is a preferred schematic diagram that the Non-DVR set top box sets bookmark according to an embodiment of the present invention. As shown in Fig. 4, if it is the Non-DVR set top box, it is needed to display the two bookmarks [Follow-me bookmark position] and [This Room latest position] for the user to select; after the user selects one of the two bookmarks, a bookmark adding request is initiated to the STB, and the bookmark is set as a selected type.

Preferably, in step 204, triggering the second set top box to perform the playing operation corresponding to the identification information when the type of the first set top box is the Non-DVR set top box comprises:
step 7: displaying the identification information with the sharing type stored by the DVR set top box, the identification information with the sharing type and the identification information with the private type stored by the Non-DVR set top box simultaneously; and
step 8: obtaining the type of the identification information selected by the user, and triggering the Non-DVR set top box to continue playing the multimedia file from a position indicated by the identification information corresponding to the type selected by the user after it is determined that there is identification information corresponding to the type selected by the user on the Non-DVR set top box.

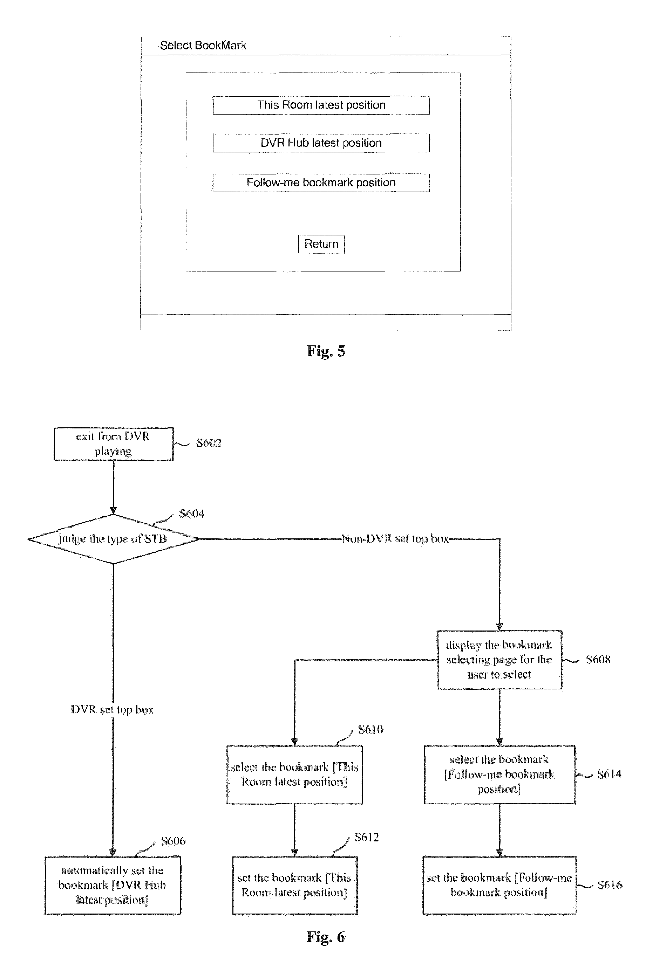

In the preferred embodiment, Fig. 5 is a preferred schematic diagram of selecting bookmark for breakpoint play on the Non-DVR set top box according to an embodiment of the present invention. As shown in Fig. 5, if it is the Non-DVR set top box, it is needed to display the three bookmarks [DVR Hub latest position], [Follow-me bookmark position] and [This Room latest position] for the user to select; after the user selects one of the three bookmarks, a bookmark information inquiry is initiated to the STB; if the bookmark exists, continually playing from the bookmark; or else, playing from the beginning.

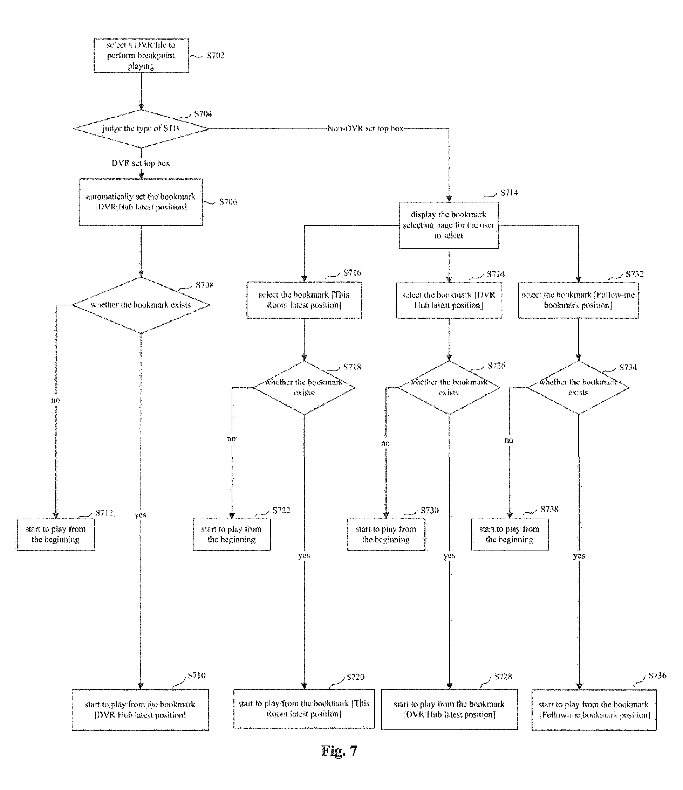

The above preferred process of implementation is further described in combination with the preferred embodiments shown in Fig. 6 and Fig. 7 below.

Fig. 6 is a preferred flowchart of setting bookmark when exiting from playing according to an embodiment of the present invention. As shown in Fig. 6, the flow may include the following processing steps:
step 602: corresponding to an exiting operation of the user, exiting from DVR playing;
step 604: the EPG component determines the type of the STB; if it is the DVR set top box, continuing to perform step 606; if it is the Non-DVR set top box, turning to step 608;
step 606: the DVR set top box automatically sets the bookmark as [DVR Hub latest position]; the flow ends;
step 608: if it is the Non-DVR set top box, it is needed to display the two bookmarks [Follow-me bookmark position] and [This Room latest position] for the user to select; if the user selects the bookmark [This Room latest position], turning to step 610; if the user selects the bookmark [Follow-me bookmark position], turning to step 614;
step 610: the user selects the bookmark [This Room latest position];
step 612: the Non-DVR set top box sets the bookmark [This Room latest position]; the flow ends;
step 614: the user selects the bookmark [Follow-me bookmark position]; and
step 616: the Non-DVR set top box sets the bookmark [Follow-me bookmark position]; the flow ends.

Fig. 7 is a preferred flowchart of breakpoint play according to an embodiment of the present invention. As shown in Fig. 7, the flow comprises the following steps:
step 702: corresponding to a breakpoint play operation of the user, selecting a DVR file to perform breakpoint play;
step 704: the EPG component determines the type of the STB; if it is the DVR set top box, continuing to perform step 706; if it is the Non-DVR set top box, turning to step 714;
step 706: the DVR set top box automatically selects the bookmark [DVR Hub latest position];
step 708: the DVR set top box determines whether there is the bookmark [DVR Hub latest position] currently; if so, continuing to perform step 710; or else, turning to step 712;
step 710: the DVR set top box starts to play from the bookmark [DVR Hub latest position]; the flow ends;
step 712: the DVR set top box restarts to play from the beginning of the file; the flow ends;
step 714: the Non-DVR set top box displays a bookmark displaying page for the user to select; if the user selects the bookmark [This Room latest position], turning to step 716; if the user selects the bookmark [DVR Hub latest position], turning to step 724; if the user selects the bookmark [Follow-me bookmark position], turning to step 732;
step 716: the user selects the bookmark [This Room latest position];
step 718: the Non-DVR set top box determines whether there is the bookmark [This Room latest position] currently; if so, continuing to perform step 720; or else, turning to step 722;
step 720: the Non-DVR set top box starts to play from the bookmark [This Room latest position]; the flow ends;
step 722: the Non-DVR set top box restarts to play from the beginning of the file; the flow ends;
step 724: the user selects the bookmark [DVR Hub latest position];
step 726: the Non-DVR set top box determines whether there is the bookmark [DVR Hub latest position] currently; if so, continuing to perform step 728; or else, turning to step 730;
step 728: the Non-DVR set top box starts to play from the bookmark [DVR Hub latest position]; the flow ends;
step 730: the Non-DVR set top box restarts to play from the beginning of the file; the flow ends;
step 732: the user selects the bookmark [Follow-me bookmark position];
step 734: the Non-DVR set top box determines whether there is the bookmark [Follow-me bookmark position] currently; if so, continuing to perform step 736; or else, turning to step 738;
step 736: the Non-DVR set top box starts to play from the bookmark [Follow-me bookmark position]; the flow ends; and
step 738: the Non-DVR set top box restarts to play from the beginning of the file; the flow ends.

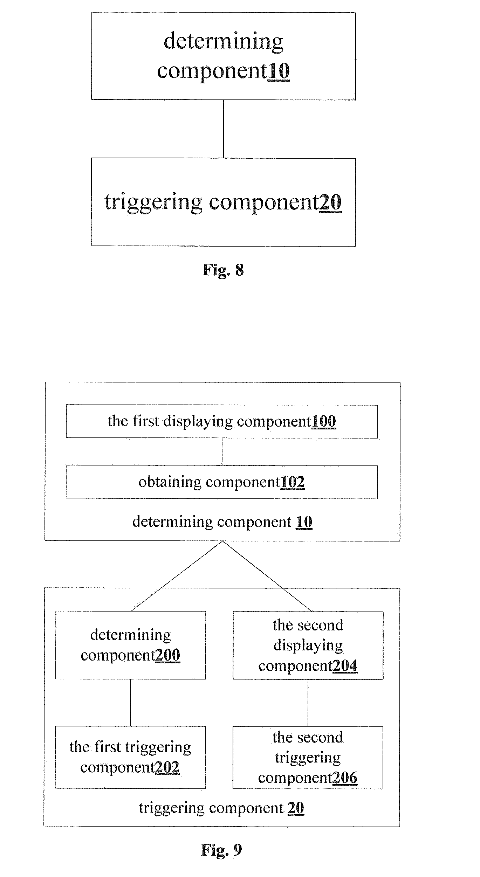

Fig. 8 is a structural block diagram of a device for processing breakpoint play according to an embodiment of the present invention. As shown in Fig. 8, the device for processing breakpoint play comprises: a determining component 10 is configured to determine a type of identification information to be stored, wherein the identification information is used for indicating to pause playing or exit from playing when the first set top box plays the file, and the type includes at least one of the followings: the sharing type and the private type; the sharing type being an identification type which is stored by the first set top box triggered by an EPG server when the first set top box last exits from playing, is shared by a plurality of set top boxes and is used for indicating to continue playing from a current breakpoint; and the private type being an identification type which is stored by the first set top box triggered by the EPG server when the first set top box last exits from the playing, is only used for indicating the first set top box to continue playing from the current breakpoint; and a triggering component 20 is configured to trigger the second set top box to perform a playing operation corresponding to the identification information.

Through the above-mentioned device shown in Fig. 8, the problem of setting of a breakpoint play identification is simplex in form and lack of flexibility in related art is solved; and then, the flexible and various storing modes of identification information about breakpoint play are realized, and the requirements for multi-scenario breakpoint play in the Whole Home DVR are met.

In the preferred process of implementation, the sharing type can be a global type; the global type being an identification type which is stored by the first set top box triggered by the EPG server when the first set top box last exits from the playing, is shared by all the set top boxes and is used for indicating to continue playing from the current breakpoint.

In the preferred process of implementation, the sharing type can be a global type; the global type being an identification type which is stored by the first set top box triggered by the EPG server when the first set top box last exits from the playing, is shared by one or more set top boxes with the same type as a type of the first set top box and is used for indicating to continue playing from the current breakpoint.

Preferably, as shown in Fig. 9, the determining component 10 comprises: a first displaying component 100 is configured to display the type of identification information to be stored; and an obtaining component 102 is configured to obtain the type of identification information selected by a user.

Preferably, the first displaying component 100 is configured to determine whether to display the type of the identification information to be stored according to the type of the first set top box, wherein the type of the first set top box includes one of the followings: the DVR set top box and the Non-DVR set top box; and the obtaining component 102 is configured to obtain the identification information selected by the user when the type of the first set top box is the Non-DVR set top box.

Preferably, as shown in Fig. 9, the triggering component 20 comprises: a determining component 200 is configured to determine that there is identification information of the sharing type on the DVR set top box when the type of the first set top box is the DVR set top box,; and a first triggering component 202 is configured to trigger the DVR set top box to continue playing a multimedia file from a position indicated by the identification information with the sharing type.

Preferably, the first displaying component 100 is further configured to display the identification information with the sharing type and the identification information with the private type stored by the Non-DVR set top box simultaneously when the type of the first set top box is the Non-DVR set top box; and the obtaining component 102 is further configured to obtain the type of the identification information selected by the user and trigger the Non-DVR set top box to store the type of the identification information selected by the user.

Preferably, as shown in Fig. 9, the triggering component 20 also comprises: a second displaying component 204 is configured to display the identification information of the sharing type stored by the DVR set top box, the identification information of the sharing type and the identification information of the private type stored by the Non-DVR set top box simultaneously when the type of the first set top box is the Non-DVR set top box; and a second triggering component 206 is configured to obtain the type of the identification information selected by the user, and trigger the Non-DVR set top box to continue playing the multimedia file from a position indicated by the identification information corresponding to the type selected by the user after it is determined that there is identification information corresponding to the type selected by the user on the Non-DVR set top box.

It needs to be noted that, a preferred operating mode of the components and components shown in Fig. 8 to Fig. 9 interacting with each other can refer to the embodiments shown in Fig. 2 to Fig. 7, so it will not be repeated here.

In the above-mentioned description, it can be seen that the above embodiments achieve the following technical effects (it needs to be noted that, these effects can be achieved by some preferred embodiments): solving the problem of setting of a breakpoint play identification is simplex in form and lack of flexibility in related art, realizing the flexible and various storing modes of identification information about breakpoint play, and meeting the requirements for multi-scenario breakpoint play in the Whole Home DVR.

Obviously, those skilled in the art shall understand that the above-mentioned components and steps of the present invention can be realized by using general purpose calculating device, can be integrated in one calculating device or distributed on a network which consists of a plurality of calculating devices. Alternatively, the components and the steps of the present invention can be realized by using the executable program code of the calculating device. Consequently, they can be stored in the storing device and performed by the calculating device, or they are made into integrated circuit component respectively, or a plurality of components or steps thereof are made into one integrated circuit component. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the present invention are all included in the scope of the protection of the present invention.

## Claims

1. A method for processing breakpoint play, **characterized by** comprising:
determining a type of identification information to be stored, wherein the identification information is used for indicating to pause playing or exit from playing when a first set top box plays a file, and the type comprises at least one of the followings: a sharing type and a private type; the sharing type being an identification type which is stored by the first set top box triggered by an Electronic Program Guide (EPG) server when the first set top box last exits from playing, is shared by a plurality of set top boxes and is used for indicating to continue playing from a current breakpoint; and the private type being an identification type which is stored by the first set top box triggered by the EPG server when the first set top box last exits from the playing, is only used for indicating the first set top box to continue playing from the current breakpoint; and
triggering a second set top box to perform a playing operation corresponding to the identification information.

2. The method according to claim 1, **characterized in that** the sharing type is a global type; the global type being an identification type which is stored by the first set top box triggered by the EPG server when the first set top box last exits from the playing, is shared by all set top boxes and is used for indicating to continue playing from the current breakpoint.

3. The method according to claim 1, **characterized in that** the sharing type is a global type; the global type being an identification type which is stored by the first set top box triggered by the EPG server when the first set top box last exits from the playing, is shared by one or more set top boxes with the same type as a type of the first set top box and is used for indicating to continue playing from the current breakpoint.

4. The method according to any one of claims 1 to 3, **characterized in that** determining the type of identification information to be stored comprises:
displaying the type of identification information to be stored; and
obtaining the type of identification information selected by a user.

5. The method according to claim 4, **characterized in that** displaying the type of identification information to be stored comprises:
determining whether to display the type of the identification information to be stored according to the type of the first set top box, wherein the type of the first set top box comprises one of the followings: a Digital Video Recorder (DVR) set top box and a Non-Digital Video Recorder (Non-DVR) set top box;
obtaining the type of identification information selected by the user comprises:
obtaining the identification information selected by the user when the type of the first set top box is the Non-DVR set top box.

6. The method according to claim 5, **characterized in that** triggering the second set top box to perform the playing operation corresponding to the identification information when the type of the first set top box is the DVR set top box comprises:
determining that there is identification information with the sharing type on the DVR set top box; and
triggering the DVR set top box to continue playing a multimedia file from a position indicated by the identification information with the sharing type.

7. The method according to claim 6, **characterized in that** determining the type of the identification information to be stored when the type of the first set top box is the Non-DVR set top box comprises:
displaying the identification information with the sharing type and the identification information with the private type stored by the Non-DVR set top box simultaneously; and
obtaining the type of the identification information selected by the user, and triggering the Non-DVR set top box to store the type of the identification information selected by the user.

8. The method according to claim 7, **characterized in that** triggering the second set top box to perform the playing operation corresponding to the identification information when the type of the first set top box is the Non-DVR set top box comprises:
displaying the identification information with the sharing type stored by the DVR set top box, the identification information with the sharing type and the identification information with the private type stored by the Non-DVR set top box simultaneously; and
obtaining the type of the identification information selected by the user, and triggering the Non-DVR set top box to continue playing the multimedia file from a position indicated by the identification information corresponding to the type selected by the user after it is determined that there is identification information corresponding to the type selected by the user on the Non-DVR set top box.

9. A device for processing breakpoint play, **characterized by** comprising:
a determining component configured to determine a type of identification information to be stored, wherein the identification information is used for indicating to pause playing or exit from playing when a first set top box plays a file, and the type comprises at least one of the followings: a sharing type and a private type; the sharing type being an identification type which is stored by the first set top box triggered by an Electronic Program Guide (EPG) server when the first set top box last exits from playing, is shared by a plurality of set top boxes and is used for indicating to continue playing from a current breakpoint; and the private type being an identification type which is stored by the first set top box triggered by the EPG server when the first set top box last exits from the playing, is only used for indicating the first set top box to continue playing from the current breakpoint; and
a triggering component configured to trigger a second set top box to perform a playing operation corresponding to the identification information.

10. The device according to claim 9, **characterized in that** the sharing type is a global type; the global type being an identification type which is stored by the first set top box triggered by the EPG server when the first set top box last exits from the playing, is shared by all set top boxes and is used for indicating to continue playing from the current breakpoint.

11. The device according to claim 9, **characterized in that** the sharing type is a global type; the global type being an identification type which is stored by the first set top box triggered by the EPG server when the first set top box last exits from the playing, is shared by one or more set top boxes with the same type as a type of the first set top box and is used for indicating to continue playing from the current breakpoint.

12. The device according to any one of claims 9 to 11, **characterized in that** the determining component comprises:
a first displaying component, configured to display the type of identification information to be stored; and
an obtaining component configured to obtain the type of identification information selected by a user.

13. The device according to claim 12, **characterized in that**,
the first displaying component configured to determine whether to display the type of the identification information to be stored according to the type of the first set top box, wherein the type of the first set top box comprises one of the followings: a Digital Video Recorder (DVR) set top box and a Non-Digital Video Recorder (Non-DVR) set top box; and
the obtaining component configured to obtain the identification information selected by the user when the type of the first set top box is the Non-DVR set top box.

14. The device according to claim 13, **characterized in that** the triggering component comprises:
a determining component configured to determine that there is identification information with the sharing type on the DVR set top box when the type of the first set top box is the DVR set top box,; and
a first triggering component configured to trigger the DVR set top box to continue playing a multimedia file from a position indicated by the identification information with the sharing type.

15. The device according to claim 14, **characterized in that**,
the first displaying component further configured to display the identification information with the sharing type and the identification information with the private type stored by the Non-DVR set top box simultaneously when the type of the first set top box is the Non-DVR set top box; and
the obtaining component further configured to obtain the type of the identification information selected by the user and trigger the Non-DVR set top box to store the type of the identification information selected by the user.

16. The device according to claim 15, **characterized in that** the triggering component further comprises:
a second displaying component configured to display the identification information with the sharing type stored by the DVR set top box, the identification information with the sharing type and the identification information with the private type stored by the Non-DVR set top box simultaneously when the type of the first set top box is the Non-DVR set top box; and
a second triggering component configured to obtain the type of the identification information selected by the user, and trigger the Non-DVR set top box to continue playing the multimedia file from a position indicated by the identification information corresponding to the type selected by the user after it is determined that there is identification information corresponding to the type selected by the user on the Non-DVR set top box.
